# EUROPÄISCHE PATENTSCHRIFT

(11) **EP 1 486 435 B1**
(45) Veröffentlichungstag und Bekanntmachung des Hinweises auf die Patenterteilung: **18.07.2007**
(21) Anmeldenummer: 04010493.7
(22) Anmeldetag: 03.05.2004
(51) Int. Cl.: B65G 1/137

(54) **Kommissionierlagersystem zum Kommissionieren von Transporteinheiten**
Commissioning system for commissioning of transport units
Système de préparation de commandes pour la préparation de commandes d'unités de transport

(30) Priorität: 12.06.2003 DE 10326553
(43) Veröffentlichungstag der Anmeldung: 15.12.2004
(73) Patentinhaber: Dematic GmbH & Co. KG, 63073 Offenbach am Main (DE)
(72) Erfinder: Stehr, Peter, 63179 Obertshausen (DE); Stötzner, Matthias, Balscote Bandbury OX15 6JU (GB)
(74) Vertreter: Moser & Götze

(56) Entgegenhaltungen:
- EP-A- 0 847 939
- WO-A-03/024845
- US-A- 3 561 619

## Beschreibung

Die Erfindung betrifft ein Kommissionierlagersystem zum statischen und dynamischen Bereitstellen sowie Kommissionieren von Transporteinheiten, insbesondere von in Behältern befindlichen Artikeln, wobei die Behälter mittels Fördereinrichtungen aus Behälterlagern mit in mehreren Regalreihen nebeneinander und in einer Vielzahl von Lagerebenen angeordneten Fächern mindestens einem Kommissionierarbeitsplatz zugeführt werden und dort in Durchlaufkanälen und/oder an Wechselplätzen in mehreren im Bereich des Kommissionierarbeitsplatzes befindlichen Entnahmepositionen bereitgestellt werden, wobei jeder Durchlaufkanal und/oder Wechselplatz an seiner dem Kommissionierarbeitsplatz abgewandten Seite einen Übergabebereich aufweist, dem eine Fördereinrichtung die vom Behälterlager zugeführten Behälter übergibt.

Die vorliegende Erfindung umfasst auch solche Kommissionierlager, in denen andere Transporteinheiten wie beispielsweise Tabletts, Pakete (Kartonagen) etc. verwendet werden, um das Kommissioniergut zu lagern und zu transportieren.

Bei der Kommissionierung von Artikeln unterscheidet man im wesentlichen zwei Artikeltypen, nämlich Schnellläufer und Langsamläufer. Schnellläufer sind solche Artikel, die häufig bzw. in größeren Mengen benötigt werden, während Langsamläufer solche Artikel sind, die selten bzw. in kleinen Mengen benötigt werden. Es ist bekannt, die Kommissionierung von Schnellläufer-Artikeln direkt von der Palette stattfinden zu lassen. Hierzu werden die Paletten im Kommissionierbereich bereitgestellt; die Kommissionierung erfolgt dann durch das Kommissionierpersonal. Die Kommissionierung von Langsamläufer-Artikeln findet in der Regel von Paletten in Bodenlägern bzw. in Fachbodenlägern nach dem Prinzip "Mann zur Ware" statt, d.h. der Kommissionierer geht zu den entsprechenden Lägern und entnimmt die gewünschten Artikel. Kleinteile werden gewöhnlich direkt in Fachbodenlägern gelagert und kommissioniert, und zwar ebenfalls nach dem Prinzip "Mann zur Ware".

Für die vorstehend beschriebene Lagerung der Artikel ist ein vergleichsweise hoher Platzbedarf (Fläche) erforderlich. Auch wird als nachteilig empfunden, dass dann, wenn die Kommissionierung für einen Auftrag durch ein und denselben Kommissionierer erfolgen soll, dieser längere Wege zurücklegen muss, sofern der Auftrag aus Artikeln des Schnell- und Langsamläuferbereiches besteht, weil er Artikel aus mehreren Lagerbereichen zusammenzutragen hat. Falls andererseits die Aufträge in den jeweiligen Lagerbereichen nur teilbearbeitet werden, d.h. die Kommissionierung der Langsamläufer-Artikel und der Schnellläufer-Artikel unabhängig voneinander und durch unterschiedliches Personal erfolgt, bedeutet dies eine Splittung des Kommissionierauftrags und eine damit verbundene höhere potentielle Fehlerrate sowie Mehraufwand bei der anschließenden Zusammenführung.

Weiterhin sind aufgrund der Lagerung der Schnellläufer-Artikel einerseits und der Langsamläufer-Artikel andererseits in verschiedenen Lagerbereichen mehrere Kommissionierprinzipien notwendig, wie z.B. "Ware zum Mann" und "Mann zur Ware". Dies erfordert entweder den Einsatz von mehreren, auf das jeweilige Kommissionierprinzip spezialisierten Kommissionierern oder aber die Kommissionierer müssen mehrere Kommissionierprinzipien erlernen. Dies wiederum bedeutet zum einen eine gewisse Unflexibilität des Gesamtsystems und erfordert zum anderen eine höhere Qualifikation des Personals. Bei der Kommissionierung aus Fachbodenlägern (insbesondere bei Kleinteilen) ist zudem eine geringe Kommissioniersicherheit und dadurch eine vergleichsweise hohe Fehlerrate gegeben.

Bei einem Kommissionierlagersystem gemäß der EP 0 847 939 ist vorgesehen, die einzelnen Behälter als Schnellläufer-Behälter oder als Langsamläufer-Behälter zu definieren, wobei die einzelnen Durchlaufkanäle teilweise als Durchlaufkanäle für Schnellläufer und teilweise als Durchlaufkanäle für Langsamläufer definiert werden. Die Schnellläufer-Behälter werden den Schnellläufer- Durchlaufkanälen und die Langsamläufer-Behälter den Wechselplätzen der Langsamläufer-Durchlaufkanäle zugeführt. Sobald ein in der Entnahmeposition befindlicher Schnellläufer-Behälter entleert ist, wird dieser aus seiner Entnahmeposition entfernt und ein weiterer, im Durchlaufkanal befindlicher Schnellläufer-Behälter wird in die Entnahmeposition verbracht. Den Wechselplätzen (Langsamläufer-Durchlaufkanälen) werden die Langsamläufer-Behälter so zugeführt, dass sich immer nur ein einziger Langsamläufer-Behälter am Wechselplatz befindet. Nach Entnahme der gewünschten Artikel aus dem Langsamläufer-Behälter wird der noch teilweise gefüllte Langsamläufer-Behälter von dem Wechselplatz zu dem Behälterlager zurücktransportiert und dort eingelagert.

Ein großer Nachteil der herkömmlichen Kommissioniersysteme ist das Platzproblem. Abhängig von der Menge der zu kommissionierenden Artikel und damit von der Anzahl der Behälter ergeben sich auch bei einer größeren Anzahl von Lagerebenen und Lagerreihen Kommissioniersysteme mit erheblichen Ausmaßen. Selbst wenn man die Behälter in die vorstehend beschriebenen Schnellläufer-Behälter und Langsamläufer-Behälter unterteilt und das Kommissionierlagersystem weitgehend automatisiert, um den Kommissionierern lange Wege zu ersparen, so ist der Raumbedarf eines umfangreichen Artikel-Lagers oft größer, als der heute zur Verfügung stehende Platz. Die Lager werden deshalb möglicht hoch gebaut, die Lagerreihen durch sehr enge Lagergassen geteilt. Dennoch werden für den manuell zu leistenden Teil der Kommissionierarbeit.je nach der geforderten Kommissionierleistung Kommissionierarbeitsplätze zwischen den Regalreihen benötigt, wo eine oder mehrere Personen die Art und Anzahl der Waren, die der Kunde bestellt hat, aus den nach Artikeln sortierten Behältern entnimmt bzw. entnehmen. Diese Kommissionierarbeitsplätze beanspruchen zusätzlichen Platz, der als Lagerfläche nicht zur Verfügung steht. Es ist leicht einzusehen, dass, insbesondere bei sehr hohen Kommissionierlagern, sogenannten Hochregallagern, ein erheblicher Lagerraum verloren geht, weil auf und unmittelbar über den Kommissionierarbeitsplätzen keine Behälter gelagert werden können. Zudem sind die Arbeitsplätze alles andere als attraktiv, wenn man bedenkt, dass die Kommissionierer in einer Schlucht zwischen hohen Regalreihen bei Kunstlicht häufig nicht sehr ergonomisch arbeiten müssen.

Ziel der vorliegenden Erfindung ist es, ein zeit- und kräftesparendes Kommissionierlagersystem der bekannten Art so umzugestalten, dass bei hoher Raumausnutzung gleichzeitig eine kompakte ergonomische sowie attraktive Arbeitsstation zur leistungsstarken Schnell- und Langsamläufer-Kommissionierung bei hohen Pickleistung der Kommissionierer geschaffen wird.

Zur Lösung der Aufgabe wird erfindungsgemäß vorgeschlagen, dass die Durchlaufkanäle und/oder Wechselplätze sowie der Kommissionierarbeitsplatz eines gattungsgemäßen Kommissionierlagersystems im oberen Bereich des Behälterlagers angeordnet sind.

In Abkehr von der sonst üblichen Anordnung der Kommissionierarbeitsplätze am Boden des Kommissionierlagers wird erfindungsgemäß vorgeschlagen, den Kommissionierarbeitsplatz oben im Bereich des Behälterlagers anzuordnen, in der Regel unterhalb des Daches des Kommissionierlagers. Dort kann ein, beispielsweise durch Dachfenster oder Dachhauben vom Tageslicht beleuchteter, attraktiver Arbeitsplatz geschaffen werden, der dem Kommissionierer oder den Kommissionierern nicht mehr den Eindruck vermittelt, in einer schmalen Gasse oder Schlucht arbeiten zu müssen.

Ein besonderer weiterer Vorteil der erfindungsgemäßen Anordnung des Kommissionierarbeitsplatzes ist darin zu sehen, dass nach einem weiteren Merkmal der Erfindung weitere Fächer eines Behälterlagers unterhalb des Kommissionierarbeitsplatzes angeordnet sind.

Während bei Kommissionierlagersystemen nach dem Stand der Technik jeder Kommissionierarbeitsplatz in einer Gasse zwischen den Regalreihen angeordnet ist und diese Gasse dementsprechend breit ausgeführt sein muss, wird durch die Merkmale der Erfindung eine solche breite Gasse nicht mehr benötigt. Statt dessen kann der eingesparte Raum als weiteres Behälterlager benutzt werden, wobei der Kommissionierarbeitsplatz oben über diesem zusätzlichen Bereich des Behälterlagers plaziert ist. Auf diese Weise wird, insbesondere bei Hochregallagern, ein erheblicher zusätzlicher Lagerplatz geschaffen, der mit der attraktiven Anordnung des Kommissionierarbeitsplatzes einhergeht.

Besonders günstig ist es, wenn nach einem weiteren Merkmal der Erfindung das unterhalb des Kommissionierarbeitsplatzes angeordnete Behälterlager Teil einer automatischen Kommissioniereinrichtung mit mindestens zwei Regalreihen und zwischen diesen in einer Regalgasse angeordneten Regalbediengeräten ist.

Nach einem weiteren Merkmal der Erfindung ist vorgesehen, dass die statische Bereitstellung mit Zugriff auf Schnellläufer-Behälter bei hoher Bereitstellungsleistung sowie die dynamische Bereitstellung mit Zugriff auf Langsamläufer-Behälter funktional voneinander getrennt sind. Anders als beim Stand der Technik, wo verschiedene Durchlaufkanäle je nach Bedarf für Langsam- oder Schnellläufer-Behälter definierbar sind, sieht die Erfindung also eine klare funktionale Trennung der Bereiche vor.

Erfindungsgemäß ist vorgesehen, dass die statische Bereitstellung von Schnellläufer-Behältern an den Entnahmepositionen des Kommissionierarbeitsplatzes über die dem Kommissionierarbeitsplatz zugeordneten Durchlaufkanäle erfolgt, deren Übergabebereiche von Regalbediengeräten der automatischen Kommissioniereinrichtung des Behälterlagers bedienbar sind. In an sich bekannter Weise bedienen die Regalbediengeräte vollautomatisch über die Durchlaufkanäle die Entnahmepositionen am Kommissionierarbeitsplatz, wo Schnellläufer-Produkte, d.h. solche Produkte entnommen werden, die in großer Menge und großer Anzahl benötigt werden.

Nach einem anderen Merkmal der Erfindung erfolgt die dynamische Bereitstellung von Langsamläufer-Behältern an den Entnahmepositionen der dynamischen Wechselplätze des Kommissionierarbeitsplatzes, deren Übergabebereich von Hubbalken oder Fahrzeugsystemen, wie z.B. Regalbediengeräten bedienbar sind. Bevorzugt werden Hubbalken, die mit ihrem Arbeitsbereich über mehrere Lagerebenen und über eine größere Lagerbreite in der Lage sind, die Wechselplätze mit geringem Aufwand und hoher Leistung zu bedienen.

Dabei ist es besonders günstig, wenn nach einem weiteren Merkmal der Erfindung die dynamischen Wechselplätze des Kommissionierarbeitsplatzes oberhalb einer Regalreihe mit Fächern für die Langsamläufer-Behälter angeordnet sind, zwischen der und einer parallelen benachbarten Regalreihe der Hubbalken der Fördereinrichtung verfahrbar ist, mit der der Übergabebereich der dynamischen Wechselplätze bedienbar ist. Die Langsamläufer-Behälter sind somit in unmittelbarer Nähe der dynamischen Wechselplätze angeordnet und werden mit dem Hubbalken bedient, der die Behälter sowohl aus den unmittelbar unterhalb des Kommissionierarbeitsplatzes angeordneten Fächern entnimmt, wie auch aus Fächern, die direkt gegenüber in einer zweiten Regalreihe gelagert sind, die ebenfalls im Zugriffsbereich des Hubbalkens liegt.

Das erfindungsgemäße Kommissionierlagersystem kann selbstverständlich aus wenigen Regalen mit entsprechenden Fördereinrichtungen bestehen, vorzugsweise besteht das Kommissionierlagersystem jedoch aus einer Mehrzahl von miteinander verknüpften Behälterlagern mit mehreren in deren oberen Bereichen angeordneten Kommissionierarbeitsplätzen und zugeordneten Durchlaufkanälen und/oder Wechselplätzen, die zu dem Kommissionierlagersystem zusammengestellt sind. Alle Einrichtung sind modulartig aufgebaut und können beliebig zusammengestellt und auch erweitert werden. Durch die Anordnung der Kommissionierarbeitsplätze im oberen Bereich der Behälterlager wird ein erheblicher zusätzlicher Raum genutzt, der bei herkömmlichen Kommissionierlagersystemen durch die Kommissionierarbeitsplätze belegt war und somit als Lagerraum nicht zur Verfügung stand.

Besonders günstig ist es, wenn das Kommissionierlagersystem aus zueinander parallelen Hochregalen mit vorzugsweise doppelt-tiefen Behälterplätzen je Lagerebene besteht, wobei zwischen zwei Hochregalen Lagergassen gebildet sind, in denen Regalbediengeräte zum Transport der Behälter zwischen ihren Lagerplätzen und den Übergabereichen der Durchlaufkanäle oder der Hubbalken der Wechselplätze angeordnet sind. Hochregallager mit sehr vielen Lagerebenen sind natürlich besonders geeignet, weil der Raum unterhalb der Kommissionierarbeitsplätze besonders groß ist und somit ein deutlich großer zusätzlicher Lagerraum geschaffen wird. Die Übergabe der Behälter kann mittels der Regalbediengeräte direkt zu den Durchlaufkanälen erfolgen, es ist aber auch denkbar, Behälter durch freie Kanäle der Regalreihen hindurch in den Bereich der Hubbalken zu fördern, wo sie übernommen und in Langsamläufer-Bereiche eingelagert werden. Die Plätze für die Bereitstellung von Schnell- und Langsamläufer-Behälter sind auf diese Weise wechselseitig austauschbar. Die verwendeten Hubbalken bedienen je nach Leistungsanforderung eine oder mehrere Arbeitsstationen anpassbar.

Ein besonderer Vorteil der vorliegenden Erfindung ist die deutlich höhere Raumausnutzung, die sich durch die Anordnung zusätzlicher Behälterlagerplätze unterhalb der Kommissionierarbeitsplätze ergibt. Die funktionale Trennung der Bereitstellung von Schnellläufer-Behältern und Langsamläufer-Behältern erlaubt in vorteilhafter Weise einen Massenspeicher mit Zugriff auf die Schnellläufer- Behälter bei mittlerer Bereitstellungsleistung, vorzugsweise mit Hilfe eines automatischen Kommissionierlagersystems, und eine hochdynamische Bereitstellung mit Zugriff auf die Langsamläufer-Behälter durch einen Hubbalken. Die Verwendung eines Hubbalken erhöht die Bereitstellungsleistung des Kommissionierlagers deutlich; denn der Hubbbalken ist schneller als ein Regalbediengerät. Ein weiterer Vorteil der Erfindung besteht darin, dass das erfindungsgemäße Kommissionierlager modular in seinem Aufbau an die Anforderungen anpassbar ist. Die Erfindung schafft eine äußerst attraktive Tageslicht-Arbeitsstation für die Kommissionierer, was sich positiv auf die Pickleistungen auswirkt.

Ein Ausführungsbeispiel der Erfindung ist der Zeichnung dargestellt. Es zeigt:
- Fig. 1: Ein Kommissionierlagersystem nach der Erfindung in perspektivischer Darstellung,
- Fig. 2: ein erfindungsgemäßes Kommissionierlagersystem in Seitenansicht und
- Fig. 3: eine Draufsicht auf einen Bereich des erfindungsgemäßen Kommissionierlagers mit zwei Kommissionierarbeitsplätzen.

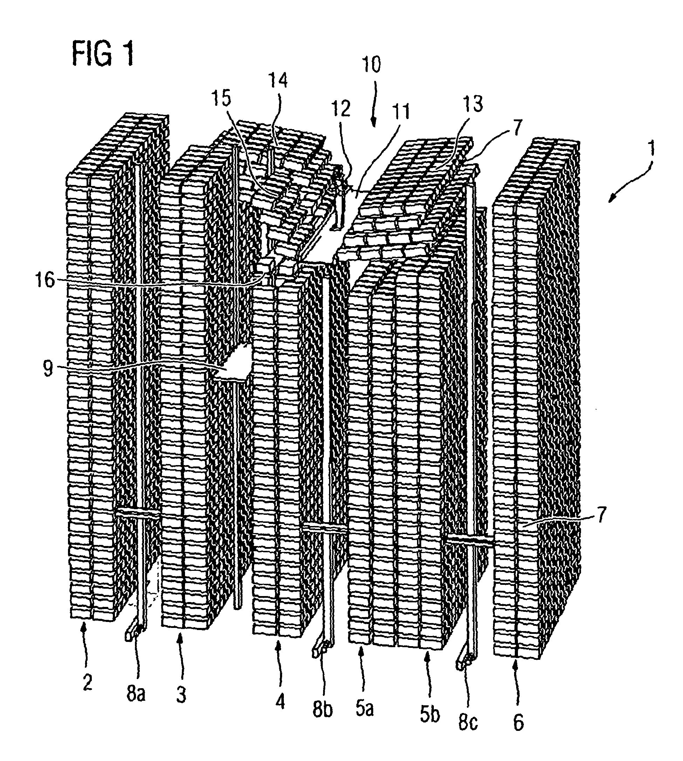

In Fig. 1 ist allgemein mit 1 ein für die Erfindung typischer Bereich eines Kommissionierlagersystems bezeichnet. Die Zeichnungsdarstellung ist perspektivisch gewählt und zeigt in grob schematischer Darstellung ein aus mehreren Regalreihen 2 - 6 bestehendes Behälterlager, in dem die Behälter, von denen einer der Behälter mit 7 beziffert ist, gelagert sind. Zwischen den Regalreihen 2 und 3, 4 und 5a sowie 5b und 6 sind jeweils Regalbediengeräte 8a bis 8c verfahrbar, welche beidseitig der zwischen den Regalreihen gebildeten Lagergassen doppelt-tief in die Behälterlagerplätze eingreifen und dort Behälter entnehmen und zurücksetzen können.

Zwischen den Regalreihen 3 und 4 verfährt in einem Bereich der Lagergasse ein Hubbalken 9, der Behälter 7 aus der dem Hubbalken zugewandten jeweils vorderen Regalreihe entnehmen und dort wieder abstellen kann. Wie in Fig. 1 erkennbar, ist mit 10 ein Kommissionierarbeitsplatz bezeichnet, der erfindungsgemäß im oberen Bereich des Kommissionierlagersystems 1 angeordnet ist. Der Kommissionierarbeitsplatz 10 besteht im wesentlichen aus der Plattform 11, auf der ein Kommissionierer 12 steht sowie aus beidseitig der Plattform 11 angeordneten Durchlaufkanälen 13 und 14 sowie Wechselplätzen 15 auf der linken Seite der Plattform 11. In den Durchlaufkanälen 13 und 14 werden auf Ablaufschrägen solche Artikeln vorgehalten, die in großer Menge und kurzen Zeitabständen benötigt werden (Schnellläufer). Die Behälter 7 werden vom Kommissionierer nacheinander geleert, die entleerten Behälter werden über ein Abtransportband 16 zum Nachfüllen wegtransportiert, während neu gefüllte Schnellläufer-Behälter aus einer der Regalreihen 2, 3, 5b oder 6 geholt und dem Durchlaufkanal 13 oder 14 im Bereich der Übergabestelle zugeführt werden.

Wie deutlicher in der Zeichnungsfigur 2 im Querschnitt durch das Kommissionierlagersystem nach Fig. 1 dargestellt ist, sind unterhalb des Kommissionierarbeitsplatzes 10 zusätzliche Regalreihen 4 und 5a angeordnet, die den freien Raum unterhalb des Kommissionierarbeitsplatzes 10 ausfüllen. Das Regalbediengerät 8c ist in der Lage, Behälter aus der rechten Hälfte der Regalreihe 5b an den Übergabebereich der Durchlaufkanäle 13 zu übergeben; das Regalbediengerät 8b kann die zusätzlich gelagerten Behälter in das System einfädeln.

Unterhalb der bei 15 dargestellten Wechselplätze sind zunächst zwei Förderer 16 zum Transport leerer und kommissionierte Behälter 7 vorgesehen. Gleichzeitig sind unmittelbar unterhalb des Wechselplatzes 15 in der linken Hälfte der Regalreihe 4 weitere Behälterplätze für Langsamläufer-Behälter vorgesehen, die von dem Hubbalken 9 bedient werden. Der Hubbalken 9 bedient auch die rechte Hälfte der Regalreihe 3, in der ebenfalls Langsamläufer-Behälter deponiert sind. Mit dem Hubbalken 9 lassen sich die Wechselplätze 15 sehr schnell und dynamisch bedienen, wobei die an den Wechselplätzen vorübergehend bereitgestellten Behälter 7 nach der Entnahme von zu kommissionierenden Artikeln in ihre Lagerplätze zurückführbar sind.

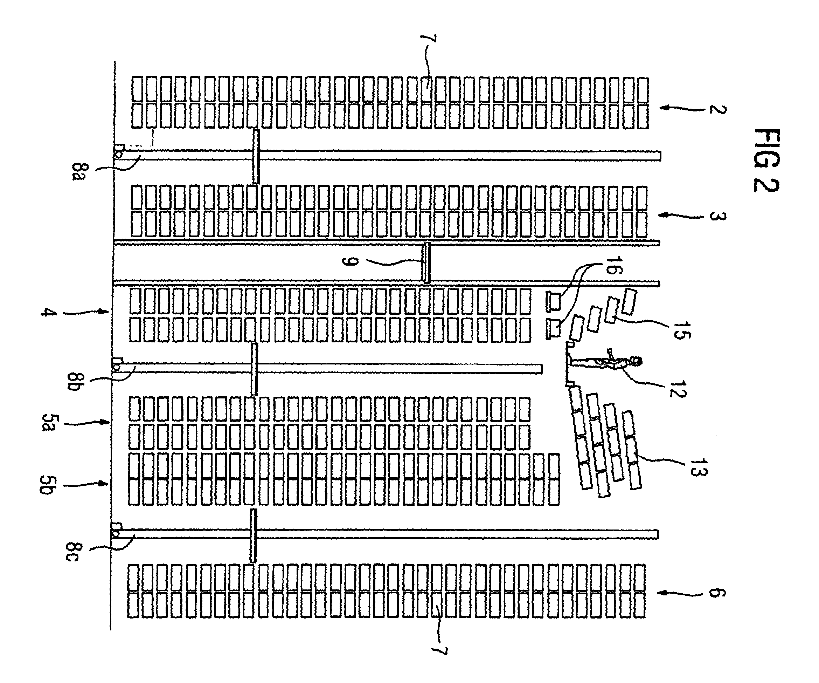

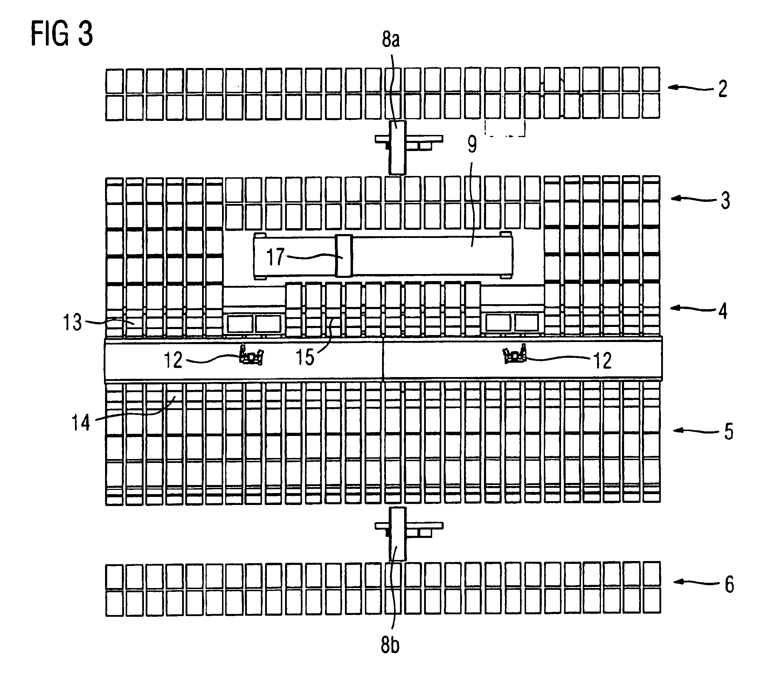

In der Zeichnungsfigur 3 ist in einer Draufsicht auf einen Teil des Kommissionierlagersystems noch einmal die Anordnung der Durchlaufkanäle 13 und 14 und der Wechselplätze 15 zu erkennen. Die beiden sichtbaren Regalbediengeräte sind in Übereinstimmung mit den Figuren 1 und 2 mit 8a und 8b bezeichnet. Sie sind in den Lagergassen zwischen den Regalreihen 2 und 3 sowie 5b und 6 in deren Längsrichtung verfahrbar und mittels teleskopierbarer Übernahmevorrichtungen in der Lage, die zweifach tief eingelagerten Behälter 7 aufzunehmen und abzusetzen. Der Hubbalken ist mit 9 bezeichnet, ein Übernahme- und Übergabewagen 17 ist entlang des vertikal verfahrbaren Hubbalkens 9 in horizontaler Richtung verschiebbar. Der Wagen 17 kann einfach tief eingelagerte Behälter 7 aus den Regalreihen 3 und 4 entnehmen und einem der Wechselplätze 15 übergeben. In den Entnahmepositionen übernehmen die Kommissionierer 12 die in den Behältern eingelagerten Artikel und stellen sie zu der vom Kunden gewünschten Kommission zusammen. Wie in Fig. 3 erkennbar ist, übergreifen die Durchlaufkanäle 13 und 14 eines Teiles der Schnellläufer-Behälter die zwischen den Regalreihen 3 und 4 gebildete Regalgasse. Die Durchlaufkanäle werden von dem Regalbediengerät 8a bedient. Die beidseitig des Hubbalkens 9 in den Regalreihen 3 und 4 positionierten Langsamläufer-Behälter werden von dem Übergabewagen 17 des Hubbalkens einund ausgelagert und an die Wechselplätze 15 übergeben. Der Hubbalken 9 bedient jeweils, wie erkennbar, die Arbeitsplätze zweier Kommissionierer 12; eine weitere Erhöhung der Kommissionierleistung der Langsamläufer-Behälter ist denkbar, wenn zwei Hubbalken vorgesehen sind und je ein Hubbalken einem der Kommissionierarbeitplätze zugeordnet ist.

## Patentansprüche

1. Kommissionierlagersystem (1) zum statischen und dynamischen Bereitstellen sowie Kommissionieren von Transporteinheiten (7), insbesondere von in Behältern (7) befindlichen Artikeln, wobei die Behälter (7) mittels Fördereinrichtungen aus Behälterlagern mit in mehreren Regalreihen (2,3,4,5a,5b,6) nebeneinander und in einer Vielzahl von Lagerebenen angeordneten Fächern mindestens einem Kommissionierarbeitsplatz (10) zugeführt werden und dort in Durchlaufkanälen (13,14) und/oder an Wechselplätzen (15) in mehreren im Bereich des Kommissionierarbeitsplatzes (10) befindlichen Entnahmepositionen bereitgestellt werden, wobei jeder Durchlaufkanal und/oder Wechselplatz an seinem dem Kommissionierarbeitsplatz abgewandten Bereich einen Übergabebereich aufweist, dem eine Fördereinrichtung die vom Behälterlager zugeführten Behälter übergibt,
**dadurch gekennzeichnet,**
**dass** die Durchlaufkanäle (13 und 14) und/oder Wechselplätze (15) sowie der Kommissionierarbeitsplatz (10) im oberen Bereich des Behälterlagers angeordnet sind.

2. Kommissionierlagersystem nach Anspruch 1,
**dadurch gekennzeichnet,**
**dass** unterhalb des Kommissionierarbeitsplatzes (10) weitere Fächer (Regalreihen 4 und 5a) eines Behälterlagers angeordnet sind.

3. Kommissionierlagersystem nach Anspruch 1 und 2,
**dadurch gekennzeichnet,**
**dass** das unterhalb des Kommissionierarbeitsplatzes angeordnete Behälterlagerteil einer automatischen Kommissioniereinrichtung mit mindestens zwei Regalreihen (4 und 5) und zwischen diesen in einer Regalgasse angeordneten Regalbediengerätes (8b) ist.

4. Kommissionierlagersystem nach Anspruch 1 bis 3,
**dadurch gekennzeichnet,**
**dass** eine statische Bereitstellung mit Zugriff auf Schnellläufer-Behälter (7) bei hoher Bereitstellungsleistung sowie eine dynamische Bereitstellung mit Zugriff auf Langsamläufer-Behälter (7) funktional voneinander getrennt sind.

5. Kommissionierlagersystem nach Anspruch 4,
**dadurch gekennzeichnet,**
**dass** die statische Bereitstellung von Schnellläufer-Behältern (7) an den Entnahmepositionen des Kommissionierarbeitsplatzes (10) über die dem Kommissionierarbeitsplatz (10) zugeordneten Durchlaufkanäle (13 und 14) erfolgt, deren Übergabebereiche von Regalbediengeräten (8a und 8c) der automatischen Kommissioniereinrichtung des Behälterlagers bedienbar sind.

6. Kommissionierlagersystem nach Anspruch 4,
**dadurch gekennzeichnet,**
**dass** die dynamische Bereitstellung von Langsamläufer-Behältern (7) an den Entnahmepositionen der dynamischen Wechselplätze (15) des Kommissionierarbeitsplatzes (10) erfolgt, deren Übergabebereiche von Hubbalken (9) oder Regalbediengeräten (8) bedienbar sind.

7. Kommissionierlagersystem nach einem oder mehreren der Ansprüche 4 bis 6,
**dadurch gekennzeichnet,**
**dass** die dynamischen Wechselplätze (15) des Kommissionierarbeitsplatzes (10) oberhalb einer Regalreihe (4) mit Fächern für die Langsamläufer-Behälter (7) angeordnet sind, zwischen der und einer parallelen benachbarten Regalreihe (3) der Hubbalken (9) der Fördereinrichtung verfahrbar ist, mit der der Übergabebereich der dynamischen Wechselplätze (15) bedienbar ist.

8. Kommissionierlagersystem nach einem oder mehreren der Ansprüche 1 bis 7,
**dadurch gekennzeichnet,**
**dass** eine Mehrzahl von miteinander verknüpften Behälterlagern mit mehreren in deren oberen Bereichen angeordneten Komrnissionierarbeitsplätzen (10) und zugeordneten Durchlaufkanälen (13 und 14) und/oder wechselplätzen (15) zu dem Kommissionierlagersystem zusammengestellt sind.

9. Kommissionierlagersystem nach einem oder mehreren der Ansprüche 1 bis 8,
**dadurch gekennzeichnet,**
**dass** das Kommissionierlagersystem aus zueinander parallelen Hochregalen mit vorzugsweise doppelt-tiefen Behälterplätzen je Lagerebene besteht, wobei zwischen zwei Hochregalen Regalgassen gebildet sind, in denen Regalbediengeräte (8) zum Transport der Behälter (7) zwischen ihren Lagerplätzen und den Übergabebereichen der Durchlaufkanäle (13 und 14) oder den Hubbalken (9) der Wechselplätze (15) angeordnet sind.

## Claims

1. Order-picking storage system (1), for the static and dynamic presentation and order picking of units for transport (7), and particularly of articles situated in containers (7), the containers (7) being fed, by transporting means, from container stores having compartments which are arranged next to one another and on a plurality of levels in a plurality of rows of racking (2, 3, 4, 5a, 5b, 6), to at least one order-picking work-station (10) and being presented there, at a plurality of withdrawal positions situated in the region of the order-picking work-station (10), in feed-through passages (13, 14), and/or at exchange stations (15), each feed-through passage and/or exchange station having, at its region remote from the order-picking work-station, a transfer region to which a transporting means transfers the containers fed in from the container store, **characterised in that** the feed-through passages (13 and 14) and/or exchange stations (15), and the order-picking work-station (10), are arranged in the upper region of the container store.

2. Order-picking storage system according to claim 1, **characterised in that** further compartments (rows of racking 4 and 5a) of a container store are arranged below the order-picking work-station (10).

3. Order-picking storage system according to claims 1 and 2, **characterised in that** the container-store-part which is arranged below the order-picking work-station is of an automatic order-picking arrangement having at least two rows of racking (4 and 5) and of a rack-serving unit (8b) which is arranged between the said rows of racking (4 and 5) in a rack aisle.

4. Order-picking storage system according to claims 1 to 3, **characterised in that** a system for static presentation giving access to containers (7) for fast-turnover items and having a high presentation capacity and a system for dynamic presentation giving access to containers (7) for slow-turnover items are functionally separate from one another.

5. Order-picking storage system according to claim 4, **characterised in that** the static presentation of containers (7) for fast-turnover items at the withdrawal positions of the order-picking work-station (10) takes place via the feed-through passages (13 and 14) associated with the order-picking work-station (10), the transfer regions of which feed-through passages (13 and 14) can be served by rack-serving devices (8a and 8c) belonging to the automatic order-picking means of the container store.

6. Order-picking storage system according to claim 4, **characterised in that** the dynamic presentation of containers (7) for slow-turnover items takes place at the withdrawal positions of the dynamic exchange stations (15) of the order-picking work-station (10), the transfer regions of which dynamic exchange stations (15) can be served by lifting platforms (9) or rack-serving devices (8a and 8c).

7. Order-picking storage system according to one or more of claims 4 to 6, **characterised in that** the dynamic exchange stations (15) of the order-picking work-station (10) are arranged above a row of racking (4) having compartments for the containers (7) for slow-turnover items, between which row of racking (4) and an adjoining parallel row of racking the lifting platform (9) can be displaced which belongs to the transporting means by which the transfer region of the dynamic exchange stations (15) can be served.

8. Order-picking storage system according to one or more of claims 1 to 7, **characterised in that** a plurality of interconnected container stores having a plurality of order-picking work-stations (10) and associated feed-through passages (13 and 14) and/or exchange stations (15) arranged in their upper regions are grouped together to form the order-picking storage system.

9. Order-picking storage system according to one or more of claims 1 to 8, **characterised in that** the order-picking storage system comprises mutually parallel high-stacking racks preferably having double-depth container locations on each level of the store, there being formed between two high-stacking racks rack aisles in which are arranged rack serving units (8) for transporting the containers (7) between their storage locations and the transfer regions of the feed-through passages (13 and 14) or the lifting platforms (9) of the exchange stations (15).

## Revendications

1. Système de stockage et de préparation de commandes (1) permettant l'approvisionnement statique et dynamique ainsi que la préparation de commandes d'unités de transport (7), notamment d'articles se trouvant dans des conteneurs (7), les conteneurs (7) étant amenés, au moyen de dispositifs de transport, de magasins de conteneurs comportant des compartiments disposés l'un à côté de l'autre en plusieurs rangées de rayonnage (2, 3, 4, 5a, 5b, 6) et en une pluralité de niveaux de magasins à au moins un emplacement de travail de préparation de commandes (10) où l'on effectue un approvisionnement dans des canaux de passage (13, 14) et/ou à des emplacements de transition (15) en plusieurs positions de retrait se trouvant dans la zone de l'emplacement de travail de préparation de commandes (10), chaque canal de passage et/ou emplacement de transition comportant dans sa zone opposée à l'emplacement de travail de préparation de commandes une zone de transfert à laquelle un dispositif de transport délivre les conteneurs amenés du magasin de conteneurs,
**caractérisé en ce que** les canaux de passage (13 et 14) et/ou les emplacements de transition (15) ainsi que l'emplacement de travail de préparation de commandes (10) sont disposés dans la zone supérieure du magasin de conteneurs.

2. Système de stockage et de préparation de commandes selon la revendication 1, **caractérisé en ce que** d'autres compartiments (rangées de rayonnages 4 et 5a) d'un magasin de conteneurs sont disposés au-dessous de l'emplacement de travail de préparation de commandes (10).

3. Système de stockage et de préparation de commandes selon la revendication 1 et 2, **caractérisé en ce que** la partie du magasin de conteneurs qui est placée au-dessous de l'emplacement de travail de préparation de commandes d'un dispositif automatique de préparation de commandes comporte au moins deux rangées de rayonnages (4 et 5) et des gerbeurs (8b) qui sont placés dans une voie de rayonnages entre ces rangées de rayonnages.

4. Système de stockage et de préparation de commandes selon les revendications 1 à 3, **caractérisé en ce qu'**un approvisionnement statique avec accès à des conteneurs à déplacement rapide (7) dans le cas d'une capacité d'approvisionnement élevée ainsi qu'un approvisionnement dynamique avec accès à des conteneurs à déplacement lent (7) sont fonctionnellement séparés l'un de l'autre.

5. Système de stockage et de préparation de commandes selon la revendication 4, **caractérisé en ce que** l'approvisionnement statique de conteneurs à déplacement rapide (7) est effectué aux positions de retrait de l'emplacement de travail de préparation de commandes (10) par les canaux de passage (13 et 14) qui sont associés à l'emplacement de travail de préparation de commandes (10) et dont les zones de transfert peuvent être utilisées par des gerbeurs (8a et 8c) du dispositif automatique de préparation de commandes du magasin de conteneurs.

6. Système de stockage et de préparation de commandes selon la revendication 4, **caractérisé en ce que** l'approvisionnement dynamique de conteneurs à déplacement lent (7) est effectué aux positions de retrait des emplacements de transition dynamiques (15) de l'emplacement de travail de préparation de commandes (10) dont les zones de transfert peuvent être utilisées par des poutres de levage (9) ou des gerbeurs (8).

7. Système de stockage et de préparation de commandes selon l'une ou plusieurs des revendications 4 à 6, **caractérisé en ce que** les emplacements de transition dynamique (15) de l'emplacement de travail de préparation de commandes (10) sont disposés au-dessus d'une rangée de rayonnages (4) comportant des compartiments destinés à des conteneurs à déplacement lent (7), et **en ce que** la poutre de levage (9) du dispositif de transport peut être déplacé entre la rangée de rayonnage et une rangée de rayonnage (3) parallèle adjacente, le dispositif de transport permettant de desservir la zone de transfert des emplacements de transition dynamiques (15).

8. Système de stockage et de préparation de commandes selon l'une ou plusieurs des revendications 1 à 7, **caractérisé en ce qu'**une pluralité de magasins de conteneurs combinés entre eux et comportant plusieurs emplacements de travail de préparation de commandes (10) disposés dans leurs zones supérieures et plusieurs canaux de passage (13 et 14) et/ou emplacements de transition (15) associés sont rassemblés pour former le système de stockage et de préparation de commandes.

9. Système de stockage et de préparation de commandes selon l'une ou plusieurs des revendications 1 à 8, **caractérisé en ce que** le système de stockage et de préparation de commandes est constitué de rayonnages verticaux parallèles entre eux et comportant avantageusement des emplacements de conteneurs sur deux rangées en profondeur par niveau de magasin, des voies de rayonnages étant formés entre deux rayonnages verticaux dans lesquelles sont disposés des gerbeurs (8) destinés au transport des conteneurs (7) entre leurs emplacements de stockage et les zones de transition des canaux de passage (13 et 14) ou les poutres de levage (9) des emplacements de transition (15).
